# EUROPÄISCHE PATENTSCHRIFT

(11) **EP 2 756 874 B1**
(45) Veröffentlichungstag und Bekanntmachung des Hinweises auf die Patenterteilung: **11.03.2015**
(21) Anmeldenummer: 13192488.8
(22) Anmeldetag: 12.11.2013
(51) Int. Cl.: B01D 29/11, B01D 29/66, B01D 29/96

(54) **Filtervorrichtung**
Filter device
Dispositif de filtre

(30) Priorität: 18.01.2013 DE 102013200820
(43) Veröffentlichungstag der Anmeldung: 23.07.2014
(73) Patentinhaber: Krones AG, 93073 Neutraubling (DE)
(72) Erfinder: Runge, Torsten, 93073 Neutraubling (DE); Fischer, Henri, 93073 Neutraubling (DE)
(74) Vertreter: Grünecker, Kinkeldey, Stockmair & Schwanhäusser

(56) Entgegenhaltungen:
- DE-A1- 19 727 625
- JP-A- 2012 157 799
- US-A1- 2005 121 382

## Beschreibung

### Gebiet der Erfindung

Die Erfindung betrifft eine Filtervorrichtung zum Filtrieren eines Fluids gemäß dem Oberbegriff des Patentanspruchs 1 und ein entsprechendes Verfahren zum Filtrieren eines Fluids.

### Hintergrund der Erfindung

Filter oder Siebe zum Filtrieren von Fluiden sind im Stand der Technik bekannt. Ebenso ist im Stand der Technik bekannt, dass sich derartige Filter oder Siebe insbesondere auf der Seite des Filters zusetzen oder verstopfen, von der das Fluid auf die Filterfläche trifft. Neben einer mechanischen Reinigung der Filterflächen wie Bürsten, Abschaben, Entleeren der Rückstände aus dem Filtergehäuse oder dergleichen werden ebenso Reinigungsflüssigkeiten zur Reinigung der Filter verwendet. Diese Reinigungsflüssigkeiten können aufgrund ihrer chemischen Zusammensetzung und / oder Konzentration sowie der dabei verwendeten Anwendungstemperatur ein Gefahrenpotential darstellen. Das ist insbesondere relevant, wenn der Filter bei Verstopfung oder Verblockung geöffnet werden muss. Es ist ferner bekannt, derartige Filter oder Siebe, rückzuspülen. Die Rückspülung bedeutet die Umkehrung der vorher zum Filtrieren verwendeten Fließrichtung oder Durchströmrichtung oder Filtrierrichtung durch den Filter / das Sieb, um auf den Öffnungen befindliche Medien von der Filteroberfläche abzulösen. Diese können dann entweder weggespült werden, beispielsweise mittels einer Ableitung in einen Gully, oder in einen Sammelbehälter hinein gespült werden zur späteren Entfernung.

Die DE 10 2007 049 658 A1 beschreibt einen Filter zum Filtern von flüssigen Medien mit einer Filterkammer, in der mindestens ein rückspülbares Filterelement angeordnet ist. Es wird eine Gegenstromrückspülung mit einem festen Filtereinsatz erläutert. Es wird ein zweistufiges Rückspülen und Verwendung von Druckluft beschrieben. Zusätzlich werden vielfältige Ventile und Pumpen verwendet, um das Rückspülen zu realisieren. Die Verwendung von aufwändiger Ventiltechnik, Pumpen und Verrohrung bedeutet jedoch potentiell höhere Kosten und eine erhöhte Störanfälligkeit, so dass häufig trotzdem noch ein manueller Eingriff nötig sein kann.

Die DE 10 2004 037 280 A1 beschreibt eine Rückspülfiltervorrichtung mit mehreren Filterelementen in einem Gehäuse. Dabei nimmt wenigstens ein Filterelement eine Filtration vor und wenigstens ein anderes Filterelement wird zum Abreinigen seiner Oberfläche rückgespült. Ein Nachteil dieses Systems ist der relativ große Platzbedarf bei verhältnismäßig geringer Filterfläche. Das System ist für große Mengen Filtriermengen eher schwer geeignet. Ebenso ist es schwierig, dieses System lebensmittelgerecht zu betreiben und zu reinigen. Ferner ist durch die gleichzeitige Rückspülung eine Druckstabilisierung schwierig.

Die DE 10 2007 019 222 B3 beschreibt eine Filteranlage mit Rückspüleinrichtung mit mehreren Filterkammern, die zum Filtrieren parallel durchströmt werden und wechselseitig über Vorsteuerventile auf Rückspülen umschaltbar sind. Dabei werden Ventile in Patronenbauweise verwendet. Ein interner Filterwechsel durch Drehen der Ventileinsätze beinhaltet für die spätere Reinigung jedoch potentiell viele Toträume, die nur schlecht oder kaum zu reinigen sein können. Ferner besteht das Problem, Rückstände von einem Filter zu lösen und diese Rückstände auf einen anderen Filter zu spülen.

Angesichts der oben beschriebenen Probleme ist es Aufgabe der vorliegenden Erfindung, eine einfachere, alternative Filtervorrichtung bereitzustellen, die es in einfacher Weise ermöglicht, ein Fluid zu filtrieren und das oder die Filterelemente rückzuspülen und dabei keine Produktionsunterbrechung vornehmen zu müssen und die Vorrichtung nicht öffnen zu müssen.

### Beschreibung der Erfindung

Diese Aufgabe wird durch eine Filtervorrichtung gemäß Anspruch 1 gelöst sowie durch ein entsprechendes Verfahren gemäß Anspruch 12.

Die Erfindung stellt eine Filtervorrichtung bereit, umfassend: ein Gehäuse mit einem Einlass zum Einströmen eines Fluids und mit einem Auslass zum Ausströmen des Fluids; ein in dem Gehäuse angeordnetes hohlkörperförmiges Filterelement mit einer Mantelfläche, die einen hohlen Innenraum des Filterelementes umgibt, und die in beide Richtungen durchströmbar ist; wobei das Filterelement in dem Gehäuse derart hin und her verschiebbar ist, dass die Fließrichtung des Fluids in der Filtervorrichtung in einer ersten Stellung vom Einlass des Gehäuses in den Innenraum des Filterelementes und von dort durch die Mantelfläche nach außen in einen die Mantelfläche umgebenden Außenraum innerhalb des Gehäuses und von dort zum Auslass des Gehäuses führt, und in einer zweiten Stellung vom Einlass des Gehäuses durch den die Mantelfläche umgebenden Außenraum innerhalb des Gehäuses und von dort durch die Mantelfläche nach innen in den Innenraum des Filterelementes hinein und von dort zum Auslass führt.

In der Filtervorrichtung kann die Strömungsrichtung durch die Mantelfläche des Filterelementes zwischen einer ersten Stellung und einer zweiten Stellung gewählt werden. Das Filterelement ist zwischen den beiden Stellungen oder Positionen hin- und her bewegbar. Die Strömungsrichtung durch die Mantelfläche ist somit umkehrbar. Die Fließrichtung zwischen Einlass und Auslass des Gehäuses bleibt dabei erhalten. Nur innerhalb des Gehäuses nimmt das Fluid eine andere Fließrichtung ein. Damit kann das Filterelement bei Bedarf rückgespült werden. Das Gehäuse muss dazu nicht geöffnet werden, sondern kann verschlossen bleiben. Die Filterreinigung kann durch das Verschieben des Filterelements eingeleitet werden. Es kann dazu ein zweites Fluid verwendet werden, beispielsweise eine Spül- oder Reinigungsflüssigkeit. Ebenso kann aber auch nur ein Fluid verwendet werden, d.h. das zweite Fluid kann gleich dem ersten Fluid sein. Die Filterreinigung kann bei einer CIP, Cleaning in Place, der Vorrichtung erfolgen, insbesondere zum Ende der CIP, um für die Filtervorrichtung für die nächste Produktion vorzubereiten. Es können Filterelemente oder auch Siebelemente jeder für die Filtrieraufgabe geeigneten Loch- und/oder Spaltengröße verwendet werden. Es versteht sich, dass die eingesetzten Filter aus Metall oder Kunststoff oder Keramik gefertigt sein können. Zur Filterreinigung ist kein manueller Eingriff nötig, insbesondere keinerlei Öffnen des Gehäuses, wodurch eine potentielle Gefahrenquelle eines üblichen Arbeitsplatzes an der Vorrichtung vermieden werden kann. Der Bediener wird insbesondere nicht durch heiße Medien oder hohe Drücke oder Reinigungsmittel gefährdet, die bei einem geöffneten Gehäuse austreten könnten.

Die Durchströmrichtung oder Filtrierrichtung durch die Mantelfläche des Filterelements kann dabei frei gewählt. Je nach dem, welcher Art das Filtermaterial ist und wie viel Filtermaterial ausgefiltert werden soll, kann die Fließrichtung des Fluids von innen nach außen, bezogen auf das hohlkörperförmige Filterelement, d.h. bezogen auf die Mantelfläche des Filterelementes, oder von außen nach innen mit Hilfe der Position für das Filterelement gewählt werden. Das Filterelement hohlkörperförmig mit einem hohlen Innenraum. Die Mantelfläche des Filterelements umgibt den hohlen Innenraum. Der Raum außerhalb der Mantelfläche aber innerhalb des Gehäuses wird als Außenraum bezeichnet. Das Filterelement kann dabei zylindrisch oder rohrförmig sein. Es versteht sich, dass das Filterelement an seinen Enden offen ist.

Das Filterelement kann mit Dichtelementen in dem Gehäuse eingesetzt werden. Das Rückspülverhalten der Vorrichtung kann weiterhin durch die Formgebung der Dichtelemente beeinflusst werden. Insbesondere können die Dichtelemente tellerförmig oder scheibenförmig sein. Für verschiedene Anforderung können auch verschiedene Formen der Dichtelemente gewählt werden. Es versteht sich, dass die Dichtelemente und das Filterelement jeweils einzeln auswechselbar sein können.

Durch die Veränderung der Position des Filterelements von einer ersten Stellung in eine zweite Stellung oder umgekehrt kann die allgemeine Fließrichtung durch die Vorrichtung zwischen Einlass und Auslass typischerweise erhalten bleiben, selbst wenn rückgespült werden soll. Damit kann eine weitestgehend kontinuierliche Produktion gewährleistet werden, selbst wenn das Fluid eine hohe Filtrationsfracht enthält.

Ein weiterer Vorteil ist, dass die Einbauhöhe und Einbaulage der Filtervorrichtung unabhängig wählbar sind. Das Filtergehäuse kann geeignet angebracht werden, insbesondere auch unter Berücksichtigung von Sicherheitsaspekten. Das Filtergehäuse der Filtervorrichtung braucht dann insbesondere nicht geöffnet werden, wenn es sich beispielsweise aus produktionstechnischen Gründen in Gesichtshöhe befindet.

Die Filtervorrichtung kann ferner einen Antrieb zum Verschieben des Filterelementes in dem Gehäuse umfassen.

Dabei kann der Antrieb einen mechanischen Antrieb, beispielsweise ein Handantrieb, umfassen oder einen pneumatischen Antrieb umfassen und/oder einen Motor, beispielsweise einen Elektromotor, umfassen.

Mittels eines Antriebs kann das Filterelement in dem Gehäuse einfach bewegt werden. Die einfachste Form ist dabei ein mechanischer Antrieb wie etwa ein Handantrieb, so dass das Filterelement manuell bewegbar ist. Alternativ oder zusätzlich kann ein pneumatischer Antrieb verwendet werden. Ebenso ist die Verwendung eines Elektromotors möglich. Dadurch kann das Verschieben des Filterelementes steuerbar werden, indem der Antrieb, beispielsweise der Elektromotor, geeignet ein- oder ausgeschaltet wird. Die Stellung des Filterelements im Gehäuse kann dabei außerhalb des Gehäuses über die Verbindung zum Antrieb oder im Antrieb selber über diverse Arten überwacht werden, z.B. Näherungsinitiator oder Positionsmelder.

In der Filtervorrichtung kann das Gehäuse ein Ventil zur Entleerung des Gehäuses umfassen.

Mittels eines Ventils zur Entleerung des Gehäuses, typischerweise im Bereich einer Bodenfläche des Gehäuses, kann das Gehäuse von der Flüssigkeit entleert werden, wobei insbesondere der Ablauf der Flüssigkeit geregelt werden kann..

Dabei kann das Ventil zur Entleerung des Gehäuses einen mechanischen oder einen pneumatischen und/oder einen elektromotorischen Antrieb umfassen.

Neben dem mechanischen Antrieb kann somit eine Steuerungsmöglichkeit für das Ventil zur Entleerung des Gehäuses bereitgestellt werden.

In der Filtervorrichtung kann das Gehäuse zusätzlich eine Öffnung aufweisen, die mit einer Abdeckung verschlossen sein kann.

Die Abdeckung oder der Deckel können mit einer Dichtung abgesichert sein. Die Abdeckung ist typischerweise im normalen Betrieb der Filtervorrichtung verschlossen. Das Öffnen der Abdeckung kann eine Wartung der Filtervorrichtung, beispielsweise ein Entnehmen oder Austauschen des Filterelementes oder einzelner Elemente des Filterelementes, deutlich vereinfachen.

Dabei kann die Abdeckung mit einer Clamp-Verbindung oder einer Schraube-Mutter-Kombination oder mit einer Schwenkbügelkombination an dem Gehäuse fixiert sein.

Dadurch kann die Abdeckung, der Deckel, mit der Vorrichtung angepassten, unterschiedlichen Befestigungen an dem Gehäuse befestigt werden. Es können ebenso andere bekannten Mittel zum reversiblen Abdichten von Öffnungen verwendet werden.

Ein Filtersystem kann ferner die oben beschriebene Filtervorrichtung umfassen, und kann eine Auslassleitung, die mit dem Auslass der Filtervorrichtung verbunden ist, umfassen, wobei die Auslassleitung ein Umschaltelement mit zwei Ausgangsleitungen umfassen kann, das ausgebildet sein kann, das Fluid in eine weiterführende Leitung zu leiten oder in eine Abflussleitung zu leiten.

Somit kann innerhalb eines Filtersystems eine Ausleitmöglichkeit für das Fluid bereitgestellt werden. Das Umschaltelement kann entsprechend den Anforderungen oder den Wünschen des Benutzers zwischen zwei Ausgangsleitungen eine Wahlmöglichkeit bereitstellen. Es versteht sich, dass auch mehr als zwei Ausgangsleitungen bereit gestellt werden können, abhängig von der vorgesehenen Anwendung. Insbesondere kann das Fluid zur weiteren Verarbeitung weiter geleitet werden. Die Fließrichtung hinter der Filtervorrichtung kann somit beeinflusst werden.

Dabei kann das Umschaltelement ein 3/2-Wegeventil umfassen oder eine Ventilkombination aus zwei Absperrventilen, beispielsweise Klappenventilen umfassen.

Verschiedene Ventile oder Ventilkombination können geeignet die Auswahl der Ausgangsleitung ermöglichen. Somit können die Ventile die Fließrichtung hinter der Filtervorrichtung geeignet beeinflussen.

Das Filtersystem kann ferner eine Zuleitung umfassen wobei die Zuleitung und die Auslassleitung jeweils wenigstens einen Druckaufnehmer oder Manometer umfassen können, die ausgebildet sind, einen Differenzdruck zwischen der Zuleitung und der Auslassleitung zu bestimmen, um die Notwendigkeit der Rückspülung der Filtervorrichtung anzuzeigen.

Mittels der Druckaufnehmer und/oder Manometer kann der Druck am oder vor dem Einlass der Filtervorrichtung, beispielsweise in der Zuleitung der Filtersystems bestimmt werden. Ebenso kann der Druck am Auslass der Filtervorrichtung, beispielsweise in der Auslassleitung des Filtersystems bestimmt werden. Somit kann ein Differenzdruck aus den beiden Druckwerten bestimmt werden. Der Differenzdruck kann durch einen Benutzer oder eine Kontrolleinheit bewertet werden, um die Notwendigkeit der Rückspülung der Filtervorrichtung anzuzeigen.

Das Filtersystem kann ferner eine Steuerung umfassen, die ausgebildet sein kann, das Rückspülen periodisch durchzuführen oder wenn ein bestimmter vordefinierter Differenzdruck überschritten ist.

Die Steuerung kann insbesondere in automatischer Weise den Differenzdruck bewerten und mit einem oder mehreren vordefinierten Differenzdrücken vergleichen. Die Steuerung kann das Rückspülen automatisch einleiten. Die Durchführung des Rückspülens kann periodisch geschehen. Dadurch kann eine im Wesentlichen kaum unterbrochene Produktion gewährleistet werden. Unterbrechungszeiten während des Filtrierens können minimiert oder sogar weitestgehend vermieden werden.

Die Steuereinheit kann gemeinsam mit der Kontrolleinheit eine Überwachungsfunktion ausüben, so dass die Rückspülung zusätzlich eingeleitet werden kann, wenn beispielsweise ein plötzliche Abweichung des Differenzdrucks oder ein zu hoher Differenzdruck von der Kontrolleinheit registriert wird.

Die Erfindung stellt ferner ein Verfahren zum Filtrieren eines Fluids mit einer Filtervorrichtung wie oben beschrieben bereit, das Verfahren umfassend die Schritte: (a) Verschieben des Filterelementes in die erste oder die zweite Stellung; (b) Durchströmen des Filterelements mit dem Fluid vom Innenraum des Filterelements durch die Mantelfläche nach außen oder vom die Mantelfläche umgebenden Außenraum durch die Mantelfläche nach innen in den Innenraum des Filterelements; Verschieben des Filterelements von der in Schritt gewählten Stellung in die andere der beiden Stellungen; und Durchströmen des Filterelements mit einem zweiten Fluid, wobei die Strömungsrichtung durch die Mantelfläche gegenüber der Strömungsrichtung in Schritt (b) umgekehrt ist.

Die Vorteile des Verfahrens entsprechen denen der Vorrichtung, wie sie bereits oben diskutiert worden sind. Es versteht sich, dass zu einem Filtrierverfahren ein Schritt des Rückspülens gehört.

In dem Verfahren kann das Gehäuse ein Ventil zur Entleerung des Gehäuses umfassen; und ferner den Schritt umfassen: (d) Entleeren des Gehäuses durch Öffnen des Ventils zur Entleerung des Gehäuses.

Das Verfahren kann ferner den Schritt umfassen: (c1) Bestimmen eines Differenzdrucks zwischen Einlass und Auslass der Filtervorrichtung und Anzeigen des Differenzdrucks zwischen Einlass und Auslass.

Hierdurch kann der Differenzdruck zwischen Einlass und Auslass angezeigt werden. Ein Benutzer kann aufgrund der angezeigten Information eine Rückspülung des Filterelementes einleiten.

Ferner kann das Verfahren den Schritt umfassen: (c2) Signalisieren der Notwendigkeit der Rückspülung des Filterelements, wenn ein vorbestimmter Schwellwert des Differenzdrucks überschritten und (c3) Einleiten des Rückspülens gemäß Schritt (c).

Dadurch kann das Rückspülen gemäß Schritt (c) dann eingeleitet werden, wenn ein vorbestimmter Differenzdruck überschritten wird. Dadurch kann beispielweise automatisch eine Rückspülung eingeleitet werden, die von einem Kontrollelement, beispielsweise der Steuerung, automatisch eingeleitet wird.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Es zeigen:
- Figur 1A:: Schematische Seitenansicht einer Filtervorrichtung mit einer Strömungsrichtung durch das Filterelement von außen nach innen.
- Figur 1B:: Schematische Seitenansicht der Filtervorrichtung aus Figur 1A mit einer Strömungsrichtung durch das Filterelement von innen nach außen.
- Figur 2:: Schematische Seitenansicht einer Filtervorrichtung gemäß Figur 1A oder Figur 1B mit einer Abdeckung.
- Figur 3:: Schematische Seitenansicht einer Filtervorrichtung gemäß Figur 1A oder Figur 1B mit einem Ablaufventil.
- Figur 4:: Schematische Seitenansicht eines Filtersystems mit einer Filtervorrichtung gemäß Figur 1A oder Figur 1B und zwei Ablaufleitungen.
- Figur 5: Schematische Seitenansicht eines Filtersystems mit einer Filtervorrichtung gemäß Figur 1A oder Figur 1B und zwei Ablaufleitungen in einer weiteren Weiterbildung.
- Figur 6: Schematische Darstellung der Überwachung des Differenzdrucks für eine erfindungsgemäße Filtervorrichtung.

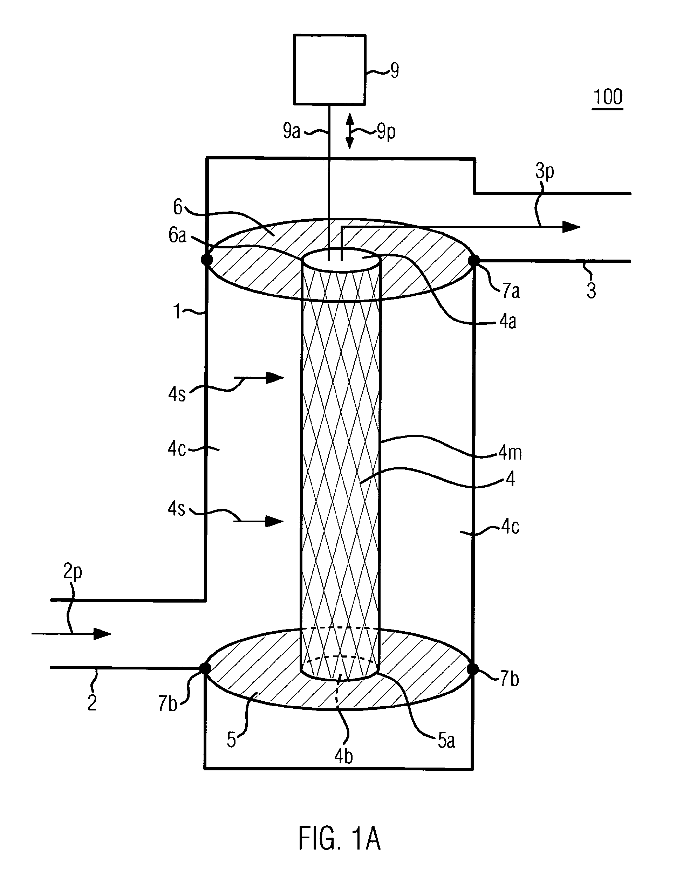

Die Figur 1A zeigt schematisch eine Seitenansicht Filtervorrichtung 100. Die Filtervorrichtung 100 besitzt ein Filtergehäuse, kurz Gehäuse genannt, 1, mit einem Einlass oder Einlauf 2 und eine Auslass oder Auslauf 3. Das Gehäuse kann beispielsweise rohrförmig ausgebildet sein. Ein Fluid wird in das Gehäuse 1 entsprechend der Fließrichtung, die durch den Pfeil 2p bezeichnet ist, durch den Einlass 2 eingelassen. Das Fluid verlässt das Gehäuse durch den Auslass 3 entsprechend der Fließrichtung, die durch den Pfeil 3p angezeigt ist. Mit dem Bezugszeichen 4 wird ein hohlkörperförmiges Filterelement bezeichnet. Das Filterelement 4 kann rohrförmig oder zylindrisch ausgebildet sein. Es sind aber auch andere Formen des Filterelementes 4 möglich. Das Filterelement 4 besitzt einen hohlen Innenraum. Das Filterelement 4 ist in dem Gehäuse hin und her bewegbar. Das Filterelement weist zwei offene Enden 4a und 4b auf. Das Filterelement 4 weist eine Mantelfläche 4m auf. Rein beispielhaft ist die Durchströmrichtung durch das Filterelement 4 von außen nach innen gewählt. Das bedeutet, dass im Inneren des hohlkörperförmigen Filterelementes 4 das Fluid fließt. Die Durchströmrichtung oder Fließrichtung durch das Filterelement ist mit den Pfeilen 4s bezeichnet. Die Mantelfläche des Filterelementes 4 wird von einem Außenraum 4c umgeben. Es versteht sich, dass der Außenraum 4c innerhalb des Gehäuses 1 liegt. Die Durchströmrichtung durch das Filterelement 4 ist also vom Innenraum des Filterelements 4 durch die Mantelfläche 4m in den Außenraum 4c, der die Mantelfläche 4m umgibt oder vom Außenraum 4c durch die Mantelfläche 4m in den Innenraum des Filterelements.

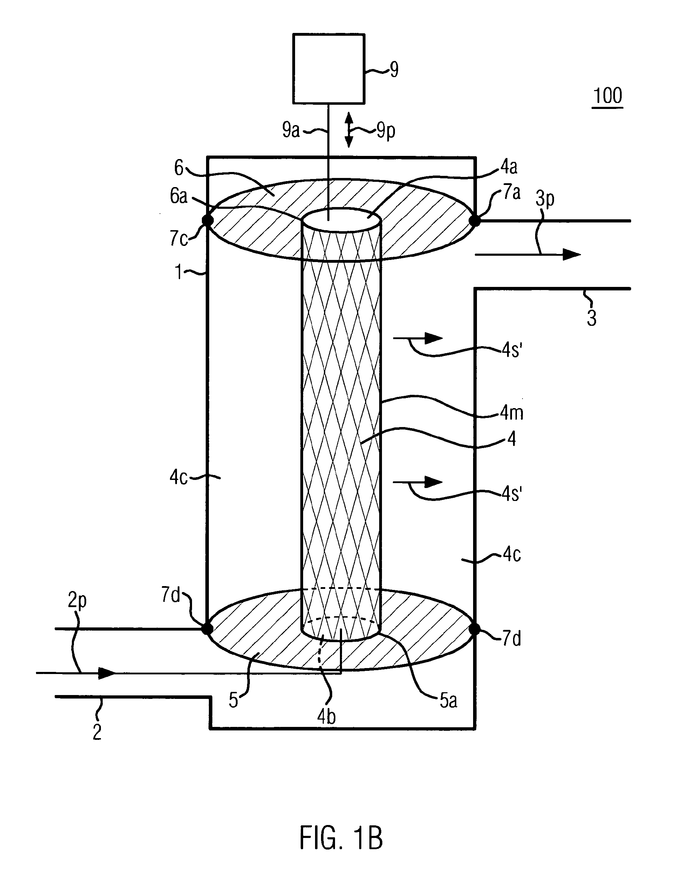

Das Filterelement 4 kann ferner mit zwei Dichtelemente 5 und 6 verbunden sein. Die Dichtelement 5 und 6 können das Filterelement 4 jeweils an seinen Enden 4a und 4b im Gehäuse 1 halten. Die Dichtelemente 5 und 6 können an den Außenrändern in abdichtender Weise zusätzliche Einbauten wie zum Beispiel Dichtringe enthalten die wiederum in den Positionen 7a und 7b ihre besondere Dichtwirkung erfüllen. Die Dichtelemente 5 und 6 weise ferner Öffnungen 6a und 5a auf. Die Öffnungen 5 und 6 entsprechen beispielsweise im Wesentlichen den offenen Enden 4a und 4b des Filterelements 4 oder können sogar etwas kleiner sein. Somit kann im Wesentlichen nur durch die Öffnungen 5 und 6 das Fluid durch die Dichtelemente 5 und 6 strömen. Die Dichtelemente 5 und 6 weisen jeweils Dichtungen auf. Mit den Dichtungen dichten die die Dichtelemente 5 und 6 jeweils gegen die Innenseite des Gehäuses 1 ab. In der Figur 1A befindet sich das Dichtelement 5 in der Position 7a. Dabei dichtet das Dichtelement 5 mit seiner Dichtung derart gegen die Innenseite des Gehäuses 1 ab, dass das einlaufende Fluid von außen nach innen durch die Mantelfläche 4m des Filterelementes 4 strömt. Ferner befindet sich das Dichtelement 6 in der Position 7b. Das Dichtelement 6 dichtet mit seiner Dichtung derart gegen die Innenseite des Gehäuses 1 ab, dass nur gefiltertes Fluid durch das offene Ende 4a des Filterelementes 4 und durch die Öffnung 6a des Dichtelements 6 zum Auslass 3 gelangen kann. Das Filterelement 4 ist in dem Gehäuse 1 bewegbar. Die Dichtelemente 5 und 6 sind typischerweise mit dem Filterelement 4 bewegbar. Das Filterelement ist typischerweise zwischen zwei Positionen oder Lagen oder Stellungen bewegbar, von denen die erste Position in Figur 1A beispielhaft dargestellt ist. Die zweite Position für das Filterelement ist beispielhaft in Figur 1B gezeigt, wie unten beschrieben wird. Es versteht sich, dass es ebenso möglich ist, zusätzlich oder alternativ eine Dichtung an der Innenseite des Gehäuses 1 vorzusehen, die derart ausgebildet sein kann, dass es die Dichtelemente 5 respektive 6 gegen die Innenwand des Gehäuses abdichten kann.

Figur 1A zeigt ferner einen Antrieb 9, der mit einem Verbindungselement 9a, etwa einer Antriebsstange mit dem Filterelement 4 verbunden ist. Mit dem Pfeil 9p ist die mögliche Bewegungsrichtung des Filterelementes 4 dargestellt. In Figur 1A ist das Filterelement 4 im Wesentlichen vertikal stehend dargestellt. Entsprechend ist die Richtung der Antriebsbewegung ebenfalls vertikal dargestellt. Es ist aber ebenso möglich, andere Lagen des Filterelementes 4 respektiver der Filtervorrichtung 100 zu wählen, beispielsweise horizontal liegend oder schräg. Die Stellung des Filterelements 4 im Gehäuse 1 kann dabei außerhalb des Gehäuses 1 über das Verbindungselement 9a zum Antrieb 9 überwacht werden. Ebenso kann die Stellung des Filterelements 4 im Antrieb 9 selbst über diverse Arten überwacht werden, z.B. Näherungsinitiator oder Positionsmelder (nicht gezeigt).

Die Figur 1B entspricht der Figur 1A und gleiche Elemente sind mit gleichen Bezugszeichen wie in Figur 1A versehen. Im Unterschied zu Figur 1A ist in Figur 1B die Filtervorrichtung 100 dargestellt, wobei die Durchströmrichtung / Filtrierrichtung durch die Mantelfläche 4m des Filterelementes 4 von innen nach außen führt. Die Durchströmrichtung durch das Filterelement 4 ist durch die Pfeile 4s' bezeichnet. Die mit dem Pfeil 4s' bezeichnete Richtung ist der in Figur 1A mit dem Pfeil 4s bezeichneten Richtung entgegengesetzt. Das Filterelement 4 ist in der zweiten Stellung beispielhaft gezeigt. Ebenso sind die Dichtelementen 5 und 6 ist in der zweiten Stellung gezeigt. Es versteht sich, dass das Filterelement 4 zwischen der ersten Stellung, wie in Figur 1A dargestellt, und der zweiten Stellung, wie in Figur 1B dargestellt ist, hin und her bewegbar ist.

In der Figur 1B ist das Dichtelement 6 in einer Position 7c dargestellt. Dadurch ist das Filterelement 4 samt Dichtelement 6 in Bezug auf den Auslass 3 des Gehäuses 1 derart positioniert, dass gefiltertes Fluid sich außerhalb der Manteloberfläche 4m des Filterelementes 4 befindet. Das gefilterte Fluid kann durch den Auslass 3 entsprechend der Pfeilrichtung 3p aus dem Gehäuse 1 der Filtervorrichtung 100 ausgeleitet werden. Das zweite Dichtelement 5 ist in einer Position 7d dargestellt und ist derart positioniert, dass das Fluid durch die Öffnung 5a des Dichtelementes in die Öffnung 4b des Filterelementes eintritt. Das Fluid wird durch den Einlass 2 entsprechend der Richtung 2p in das Gehäuse 1 der Filtervorrichtung 100 eingeleitet. Die Strömungsrichtung durch die Filtervorrichtung 100 entsprechend den Pfeilen 2p und 3p ist also die gleiche Strömungsrichtung wie in Figur 1A. Die Durchströmrichtung durch das Filterelement 4 ist in Figur 1B jedoch umgekehrt gegenüber der Durchströmrichtung / Filtrierrichtung in der Figur 1A. Dadurch kann das Filterelement 4 rückgespült werden und vom Filter an seiner Mantelfläche 4m aufgenommene Stoffe, beispielsweise Fasern, können von dieser Fläche abgelöst werden. Es versteht sich, dass die Rückspülung auch umgekehrt funktionieren kann, wenn als Durchströmrichtung für das Filtrieren zunächst die Richtung von innen nach außen gewählt wird, wie in Figur 1B gezeigt, und für das Rückspülen die Richtung von außen nach innen, wie in Figur 1B.

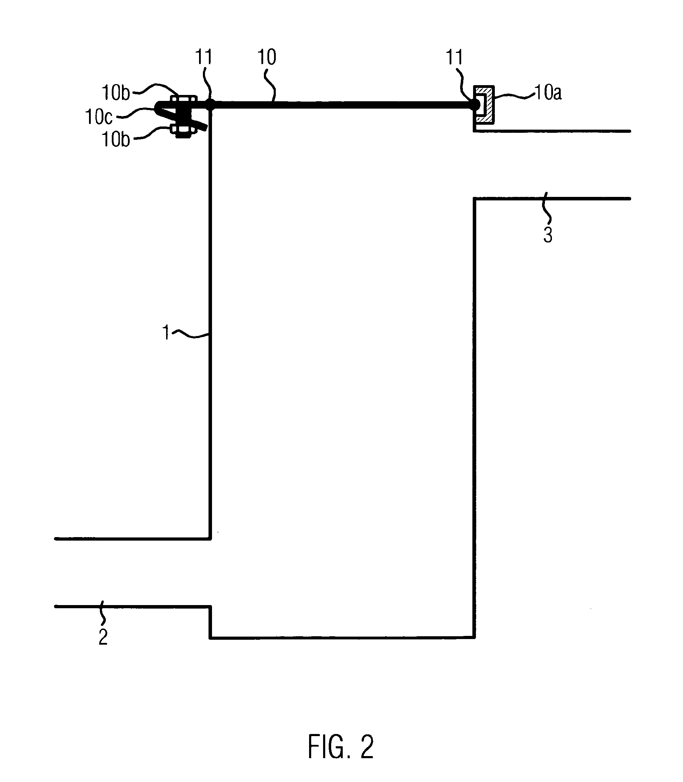

In Figur 2 ist das Gehäuse einer Filtervorrichtung gezeigt, die der Filtervorrichtung 100 aus Figuren 1A und 1B entsprechen kann. Gleiche Elemente des Gehäuses sind wiederum mit gleichen Bezugszeichen wie in den Figuren 1A und 1B bezeichnet. In Figur 2 ist zusätzlich ein Gehäusedeckel oder Abdeckung 10 gezeigt, mit der typischerweise das Gehäuse 1 verschlossen ist. Der Antrieb 9 und dessen Verbindungselement 9a sind in Figur 2 nicht dargestellt. Es versteht sich aber, dass das Verbindungselement 9a zur Bewegung des Filterelementes in den Figuren 1A und 1B in geeigneter und dichtender Weise in das Gehäuse 1 hineingeführt ist, beispielsweise durch die Abdeckung 10 oder durch die Gehäusewand des Gehäuses 1 (nicht gezeigt).

Figur 2 zeigt verschieden Möglichkeiten der Befestigung der Abdeckung 10 auf dem Gehäuse 1. Beispielsweise kann die Abdeckung 10, wie in Figur 2 gezeigt, mit einer oder mehreren Clamp-Vorrichtungen 10a auf dem Gehäuse befestigt sein. Die Abdeckung 10 ist mit einer Dichtung 11 in dichtender Weise auf dem Gehäuse 1 befestigt. Es versteht sich, dass sowohl die Abdeckung 10 als auch die Dichtung 11 derart wählbar sind, um den Drücken im Gehäuse 1 in abdichtender Weise standhalten zu können. Figur 2 zeigt außerdem einen Schwenkbügel 10c und eine Schraube-Mutter-Kombination 10b. Diese können gemeinsam oder alternativ verwendet werden. Dadurch kann die Abdeckung 10 mittels des Schwenkbügels 10c aufgeklappt werden. Das Öffnen der Abdeckung 10 durch Abnehmen oder Aufklappen mit Hilfe des Schwenkbügels 10c ermöglicht es, das Filterelement aus der Filtervorrichtung 100 zu entnehmen. Dies ist besonders geeignet für Wartungen der Vorrichtung außerhalb des normalen Filtrierbetriebes.

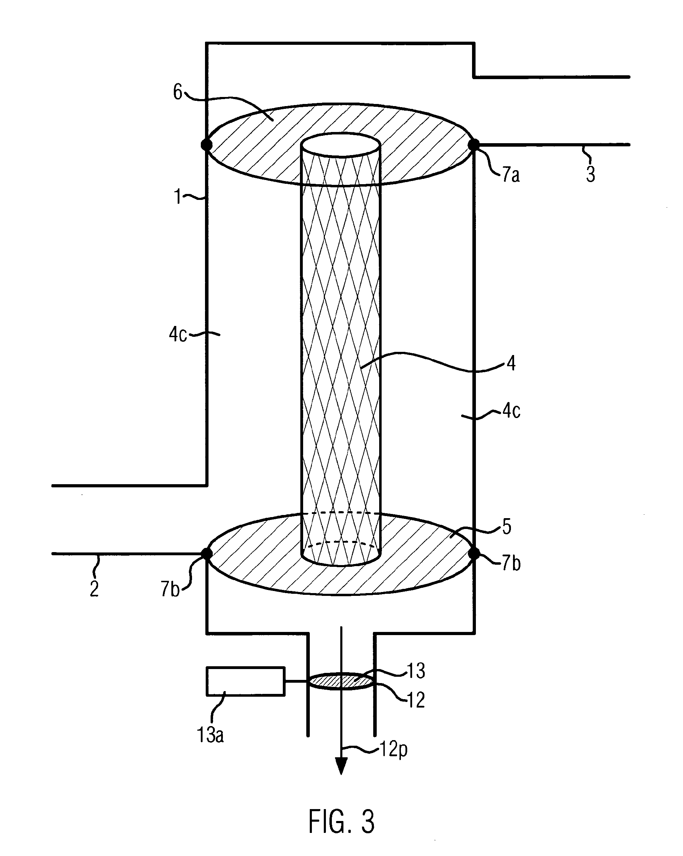

Die Figur 3 zeigt die Filtervorrichtung 100 aus Figur 1A. Gleiche Elemente sind mit gleichen Bezugszeichen versehen. Nicht alle Details aus den Figuren 1A und 1B sind eingezeichnet. Figur 3 zeigt ein Ventil 13, dass eine Ablaufleitung 12 der Vorrichtung öffnen kann. Somit kann die Filtervorrichtung 100 über die Ablaufleitung 12 entleert werden. Typischerweise befindet sich die Ablaufleitung 12 am Boden der Filtervorrichtung 100, also beispielsweise am tiefsten Punkt der Filtervorrichtung 100. Dadurch kann die Filtervorrichtung 100 beispielsweise im Rahmen einer regulären Wartung entleert werden und Schmutz oder Stoffe, die sich am Boden des Gehäuses abgesetzt haben, können ausgespült werden. Ebenso kann die Ablaufleitung 12 mittels des Ventils 13 auch während oder nach einer Rückspülung geöffnet werden, um die durch die Rückspülung gelösten Feststoffe möglichst rasch ausspülen zu können. Das Ventil 13 kann mittels eines Ventilantriebs 13a betätigt werden. Der Ventilantrieb 13a kann einen manuellen, pneumatischen oder elektrischen Antrieb bereit stellen.

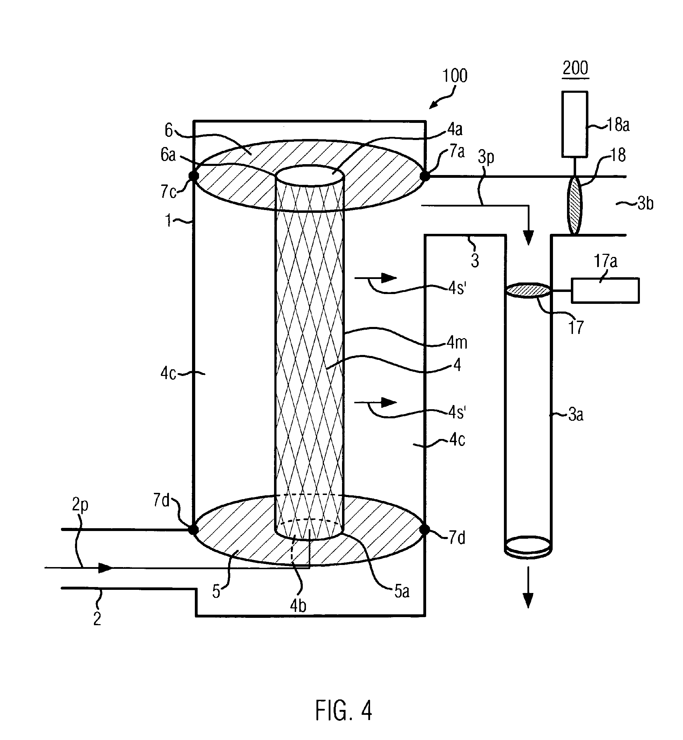

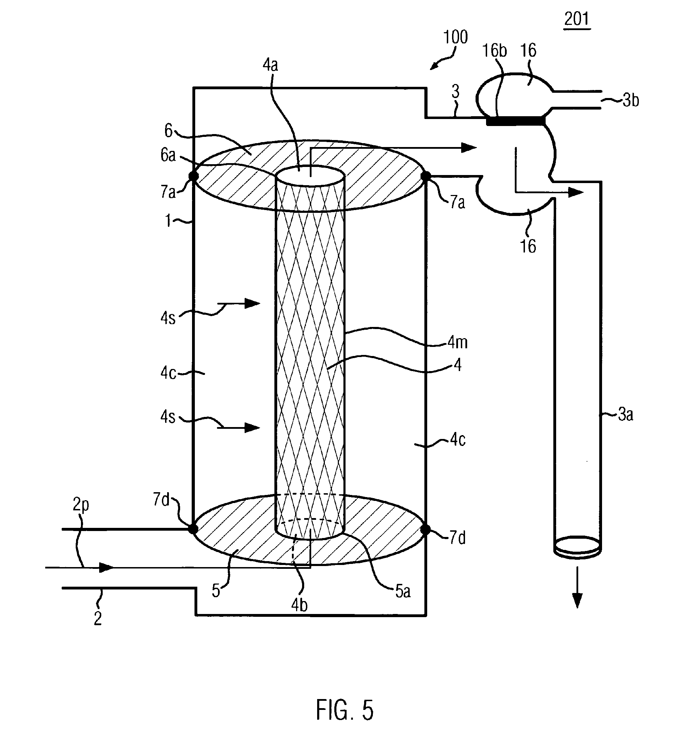

Die Figuren 4 und 5 zeigen jeweils die Filtervorrichtung aus den Figuren 1A und 1B in einem Filtersystem 200 respektive 201, das zusätzlich zwei Ausleitmöglichkeiten mit Ausgangsleitungen 3a und 3b umfasst, die verschieden angesteuert werden können. In der Figur 4 ist das Filtersystem 200 mit einer Filtervorrichtung entsprechend Figur 1B gezeigt. Dadurch ist in Figur 4 die Durchströmrichtung durch das Filterelement 5, also die Filtrierrichtung von innen nach außen gewählt. Es versteht sich, dass ebenso die Filtrierrichtung von außen nach innen gewählt werden könnte. Das Filtersystem 200 weist zwei Ausgangs- oder Auslassleitungen 3a und 3b auf. Ferner weist. Beispielsweise kann das System 200 respektive 201 der Figuren 4 und 5 über die Ausgangsleitung 3b das Fluid zu einer weiterverarbeitenden Vorrichtung leiten. Ferner kann beispielsweise die Ausgangsleitung 3a als Abfluss zu einem Auffangbehälter (nicht gezeigt) verwendet werden.

Das Umschalten zwischen den beiden Leitungen 3a und 3b kann, wie in Figur 4 skizziert, mittels eines Umschaltelements in Form einer Kombination von Ventilen geschehen. Ein Ventil 18, beispielsweise ein Absperrventil, kann die Weiterleitung des Fluids in die Leitung 3b regeln oder unterbrechen. Das Ventil 18 kann mit einem Antrieb 18a versehen sein. Der Antrieb 18a kann wiederum elektrisch, pneumatisch oder mechanisch ausgebildet sein. Ferner kann ein Ventil 17, beispielsweise ebenfalls ein Absperrventil oder ein Klappenventil, die Weiterleitung des Fluids in die Leitung 3a regeln oder unterbrechen. Das Ventil 17 kann ebenfalls mit einem Ventilantrieb 17a versehen sein. Der Antrieb 17a kann wiederum elektrisch, pneumatisch oder mechanisch ausgebildet sein. Das Ventil 17 kann an einer geeigneten Stelle in der Leitung 3a vorgesehen sein. Typischerweise ist eines der beiden Ventile 17 und 18 geschlossen während das andere Ventil geöffnet ist. Die Ventilkombination der Ventil 17 und 18 kann also die Fließrichtung hinter der Filtervorrichtung 100 regeln. Es versteht sich, dass die Ventile 17 und 18 ebenfalls durch einen Kontrolleinheit (nicht gezeigt) steuerbar sein können und dass somit elektronisch die Weiterleitung geschaltet werden kann.

Die Figur 5 zeigt eine weitere Weiterbildung ähnlich der Figur 4. In der Figur 5 wird die Weiterleitung des Fluids mittels eines nachgelagerten Umschaltelementes in Form eines Umschaltventils 16 geregelt. Das Umschaltventil 16 ist mit den beiden Ausgangsleitungen 3a und 3b verbunden und kann zwischen den Durchfluss von dem Auslass 3 der Filtervorrichtung 100 des Filtersystems 201 in eine der beiden Ausgangsleitungen 3a oder 3b regeln. Dabei entsprechen die Ausgangsleitungen 3a und 3b den bereits in Figur 4 gezeigten Ausgangsleitungen. In der Figur 5 ist rein beispielhaft die Leitung 3b mit einem Schließelement 16b des Ventils 16 verschlossen. Entsprechend ist ein Schließelement 16 für die Leitung 3a geöffnet. Damit ist in dem Beispiel der Figur 5 die Leitung 3a geöffnet, beispielsweise um Fluid oder auch andere Flüssigkeit aus der Filtervorrichtung 100 des Filtersystems 201 abfließen zu lassen. Das Umschaltventil 16 kann als 3/2-Wegeventil ausgebildet sein. Das Umschaltventil kann elektronisch steuerbar sein, wodurch von außen die Fließrichtung des Fluids in dem Filtersystem 201 hinter der Filtervorrichtung gewählt werden kann.

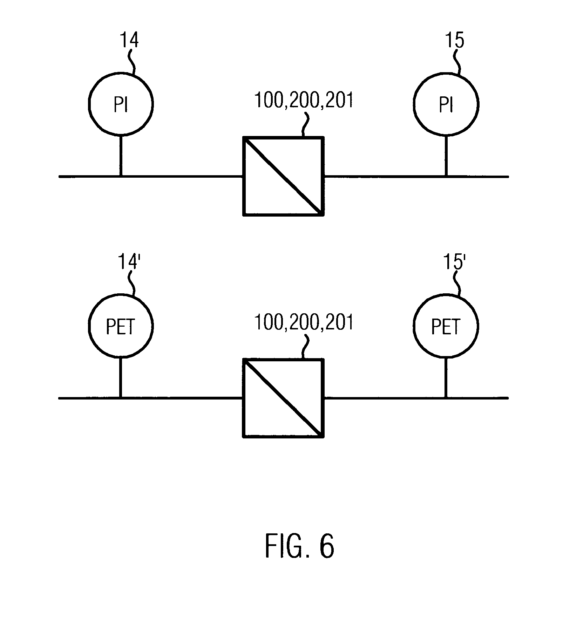

Hinsichtlich der Drücke in der Auslassleitung 3 und der Einlassleitung 2, also vor und nach dem Filterelement 4, kann eine Druckmessmöglichkeit bereit gestellt werden. Eine derartige Druckmessmöglichkeit kann optional sein. Die Auslassleitung 3 braucht keine Druckmessmöglichkeit haben, wenn der Druck, genannt Nachdruck, an einer bestimmten Stelle der Auslassleitung 3 bekannt ist. Das ist beispielsweise gegeben, wenn diese Auslassleitung 3 drucklos ist, weil sie zum Beispiel offen ohne weitere Möglichkeiten eines Druckaufbaus endet. Ebenso braucht vor dem Filterelement 4 für den Einlass 2 keine Druckmessung erfolgen, wenn beispielsweise der Druck aus bestimmten anwendungsspezifischen Gründen dort bekannt ist. Andererseits kann anwendungsbedingt eine Druckmessmöglichkeit gewünscht sein. Hierzu zeigt die Figur 6 eine schematische Skizze zur Überwachung des Differenzdrucks für die Filtervorrichtung 100. Der Druck am oder in der Nähe des Einlasses der Filtervorrichtung 100 wird mittels eines Druckanzeigers, PI (pressure indicator), 14 bestimmt. Ebenso wird der Druck am oder in der Nähe des Auslasses der Filtervorrichtung 100 mit einem weiteren Druckanzeiger 15 bestimmt. Eine Kontroll- oder Steuereinheit (nicht gezeigt), beispielsweise ein Computer, kann aus den Werten der Druckanzeiger 14 und 15 den Differenzdruck bestimmt. Sofern der Differenzdruck von vorbestimmten Werten stark abweicht, kann eine Rückspülung der Anlage angezeigt und gegebenenfalls automatisch eingeleitet werden. Hierzu kann die Kontroll- oder Steuereinheit verwendet werden. Ferner zeigt die Figur 6 die Verwendung von Druckausgleichen, PET, 14' und 15', die auch in Kombination mit den Elementen 14 und/oder 15 verwendet werden können. Die Elemente 14' und 15' können ebenfalls durch die Kontroll- oder Steuereinheit (nicht gezeigt) in automatisierter Weise überprüft werden. Durch die Verwendung der Überwachung des Differenzdrucks können Unterbrechungszeiten minimiert werden.

## Patentansprüche

1. Filtervorrichtung (100) umfassend:
ein Gehäuse (1) mit einem Einlass (2) zum Einströmen (2p) eines Fluids und mit einem Auslass (3) zum Ausströmen (3p) des Fluids;
ein in dem Gehäuse (1) angeordnetes hohlkörperförmiges Filterelement (4) mit einer Mantelfläche (4m), die einen hohlen Innenraum des Filterelementes (4) umgibt, und die in beide Richtungen (4s, 4s') durchströmbar ist; **dadurch gekennzeichnet, dass**
das Filterelement (4) in dem Gehäuse (1) derart hin und her verschiebbar ist, dass die Fließrichtung des Fluids in der Filtervorrichtung (1) in einer ersten Stellung vom Einlass (2) des Gehäuses (1) in den Innenraum des Filterelementes (4) und von dort durch die Mantelfläche (4m) nach außen in einen die Mantelfläche (4m) umgebenden Außenraum (4c) innerhalb des Gehäuses (1) und von dort zum Auslass (3) des Gehäuses (1) führt, und in einer zweiten Stellung vom Einlass (2) des Gehäuses (1) durch den die Mantelfläche (4m) umgebenden Außenraum (4c) innerhalb des Gehäuses (1) und von dort durch die Mantelfläche (4m) nach innen in den Innenraum des Filterelementes (4) hinein und von dort zum Auslass(3) führt.

2. Filtervorrichtung (100) gemäß Anspruch 1 ferner mit einem Antrieb (9, 9a) zum Verschieben des Filterelements (4, 5, 6) in dem Gehäuse (1).

3. Filtervorrichtung (100) gemäß Anspruch 2, wobei der Antrieb (9, 9a) einen mechanischen Antrieb, beispielsweise ein Handantrieb, umfasst oder wobei der Antrieb einen pneumatischen Antrieb umfasst und/oder wobei der Antrieb einen Motor, beispielsweise einen Elektromotor, umfasst.

4. Filtervorrichtung (100) gemäß wenigstens einem der Ansprüche 1 - 3, wobei das Gehäuse (1) ein Ventil (13, 13a) zur Entleerung des Gehäuses (1) umfasst.

5. Filtervorrichtung (100) gemäß Anspruch 4, wobei das Ventil (13, 13a) zur Entleerung des Gehäuses (1) einen mechanischen oder einen pneumatischen und/oder einen elektromotorischen Antrieb (13a) umfasst.

6. Filtervorrichtung (100) gemäß wenigstens einem der Ansprüche 1 - 5, wobei das Gehäuse (1) zusätzlich eine Öffnung aufweist, die mit einer Abdeckung (10) verschließbar ist.

7. Filtervorrichtung (100) gemäß Anspruch 6, wobei die Abdeckung (10) mit einer Clamp-Verbindung (10a) und/oder einer Schraube-Mutter-Kombination (10b) und/ oder mit einer Schwenkbügelkombination (10c) an dem Gehäuse (10c) fixierbar ist.

8. Filtersystem (200) umfassend eine Filtervorrichtung (100) gemäß einem der Ansprüche 1 - 7, mit einer Auslassleitung, die mit dem Auslass (3) der Filtervorrichtung (100) verbunden ist, wobei die Auslassleitung ein Umschaltelement (17, 17a, 18, 18a, 16, 16b) mit zwei Ausgangsleitungen (3a, 3b) umfasst, das ausgebildet ist, das Fluid in eine weiterführende Leitung (3b) zu leiten oder in eine Abflussleitung (3a) zu leiten.

9. Filtersystem (200) gemäß Anspruch 8, wobei das Umschaltelement ein 3/2-Wegeventil (16, 16b) umfasst oder wobei das Umschaltelement eine Ventilkombination aus zwei Absperrventilen (17, 17a, 18, 18a), beispielsweise Klappenventilen umfasst.

10. Filtersystem (200) gemäß Anspruch 8 oder 9, ferner mit einer Zuleitung wobei die Zuleitung und die Auslassleitung jeweils wenigstens einen Druckaufnehmer oder Manometer (14, 14', 15, 15') umfassen, die ausgebildet sind, einen Differenzdruck zwischen der Zuleitung und der Auslassleitung zu bestimmen, um die Notwendigkeit der Rückspülung der Filtervorrichtung (100) anzuzeigen.

11. Filtersystem (200) gemäß Anspruch 10, ferner mit einer Steuerung die ausgebildet ist, das Rückspülen periodisch durchzuführen und/oder wenn ein bestimmter vordefinierter Differenzdruck überschritten ist.

12. Verfahren zum Filtrieren eines Fluids mit einer Filtervorrichtung (100) gemäß Anspruch 1, umfassend die Schritte:
(a) Verschieben des Filterelementes (4) in die erste oder die zweite Stellung;
(b) Durchströmen des Filterelements (4) mit dem Fluid vom Innenraum des Filterelements durch die Mantelfläche (4m) nach außen oder vom die Mantelfläche (4m) umgebenden Außenraum (4c) durch die Mantelfläche (4m) nach innen in den Innenraum des Filterelements;
(c) Verschieben des Filterelements (4) von der in Schritt (a) gewählten Stellung in die andere der beiden Stellungen; und
(d) Durchströmen des Filterelements (4) mit einem zweiten Fluid, wobei die Strömungsrichtung durch die Mantelfläche (4m) gegenüber der Strömungsrichtung in Schritt (b) umgekehrt ist.

13. Verfahren gemäß Anspruch 12, wobei das Gehäuse (1) ein Ventil (13, 13a) zur Entleerung des Gehäuses (1) umfasst; ferner mit dem Schritt:
(d) Entleeren des Gehäuses (1) durch Öffnen des Ventils (13, 13a) zur Entleerung des Gehäuses (1).

14. Verfahren gemäß einem der Ansprüche 12 oder 13, ferner mit dem Schritt:
(c1) Bestimmen eines Differenzdrucks zwischen Einlass (2) und Auslass (3) der Filtervorrichtung (100) und Anzeigen des Differenzdrucks zwischen Einlass (2) und Auslass (3).

15. Verfahren gemäß Anspruch 14, ferner mit dem Schritt: (c2) Signalisieren der Notwendigkeit der Rückspülung des Filterelements (4), wenn ein vorbestimmter Schwellwert des Differenzdrucks überschritten und (c3) Einleiten des Rückspülens gemäß Schritt (c).

## Claims

1. A filter device (100) comprising:
a housing (1) with an inlet (2) for the inflow (2p) of a fluid and with an outlet (3) for the outflow (3p) of the fluid;
a hollow-shaped filter element (4) arranged in the housing (1) and having an outer surface (4m) which surrounds a hollow interior of the filter element (4), and through which fluid can flow in both directions (4s, 4s'), **characterized in that**
the filter element (4) can be shifted back and forth such that the direction of flow of the fluid in the filter device (1) leads in a first position from the inlet (2) of the housing (1) into the interior of the filter element (4) and from there through the outer surface (4m) to the outside into an exterior space (4c) surrounding the outer surface (4m) within the housing (1) and from there to the outlet (3) of the housing, and in a second position from the inlet (2) of the housing (1) through the exterior space (4c) surrounding the outer surface (4m) within the housing (1) and from there through the outer surface (4m) to the inside into the interior of the filter element (4) and from there to the outlet (3).

2. The filter device (100) according to claim 1, further comprising a drive (9, 9a) for shifting the filter element (4, 5, 6) in the housing (1).

3. The filter device (100) according to claim 2, wherein the drive (9, 9a) comprises a mechanical drive, for instance a manual drive, or wherein the drive comprises a pneumatic drive and/or wherein the drive comprises a motor, e.g. an electric motor.

4. The filter device (100) according to at least one of claims 1-3, wherein the housing (1) comprises a valve (13, 13a) for draining the housing (1).

5. The filter device (100) according to claim 4, wherein the valve (13, 13a) for draining the housing (1) comprises a mechanical or a pneumatic and/or an electromotive drive (13a).

6. The filter device (100) according to at least one of claims 1-5, wherein the housing (1) additionally comprises an opening which can be closed with a cover (10).

7. The filter device (100) according to claim 6, wherein the cover (10) can be fixed with a clamp connection (10a) and/or a screw-nut combination (10b) and/or with a pivotable bracket combination (10c) on the housing (1).

8. A filter system (200) comprising a filter device (100) according to any one of claims 1-7, comprising an outlet line which is connected to the outlet (3) of the filter device (100), wherein the outlet line comprises a switching element (17, 17a, 18, 18a, 16, 16b) having two output lines (3a, 3b), which is configured to pass the fluid into a continuing line (3b) or into a drain line (3a).

9. The filter system (200) according to claim 8, wherein the switching element comprises a 3/2 directional valve (16, 16b) or wherein the switching element comprises a valve combination consisting of two shut-off valves (17, 17a, 18, 18a), e.g. flap valves.

10. The filter system (200) according to claim 8 or 9, furthermore comprising a feed line, wherein the feed line and the outlet line respectively comprise at least one pressure sensor or manometer (14, 14', 15, 15') which are configured to determine a differential pressure between the feed line and the outlet line to indicate the necessity of back-flushing the filter device (100).

11. The filter system (200) according to claim 10, further comprising a controller configured to carry out the back-flushing operation periodically and/or when a determined predefined differential pressure is exceeded.

12. A method for filtering a fluid with a filter device (100) according to claim 1, comprising the steps of:
(a) shifting the filter element (4) into the first or the second position,
(b) passing the fluid through the filter element (4) from the interior of the filter element through the outer surface (4m) to the outside or from the exterior space (4c) surrounding the outer surface (4m) through the outer surface (4m) to the inside into the interior of the filter element;
(c) shifting the filter element (4) from the position chosen in step (a) into the other one of the two positions; and
(d) passing a second fluid through the filter element (4), wherein the direction of flow through the outer surface (4m) is opposite in comparison with the direction of flow in step (b).

13. The method according to claim 12, wherein the housing (1) comprises a valve (13, 13a) for draining the housing (1), further comprising the step:
(d) draining the housing (1) by opening the valve (13, 13a) for draining the housing (1).

14. The method according to any one of claims 12 or 13, further comprising the step:
(c1) determining a differential pressure between inlet (2) and outlet (3) of the filter device (100), and indicating the differential pressure between inlet (2) and outlet (3).

15. The method according to claim 14, further comprising the step: (c2) signaling the necessity of back-flushing the filter element (4) when a predetermined threshold value of the differential pressure is exceeded and (c3) initiating the back-flushing operation according to step (c).

## Revendications

1. Dispositif de filtre (100) comprenant :
un carter (1) avec une entrée (2) pour l'écoulement d'entrée (2p) d'un fluide et avec une sortie (3) pour l'écoulement de sortie (3p) du fluide ;
un élément filtrant (4) sous forme de corps creux agencé dans le carter (1) et comprenant une surface-enveloppe (4m), qui entoure un espace intérieur creux de l'élément filtrant (4) et qui peut être traversée par l'écoulement dans les deux directions (4s, 4s') ; **caractérisé en ce que**
l'élément filtrant (4) peut coulisser en va et vient dans le carter (1) de manière telle, que la direction d'écoulement du fluide dans le dispositif de filtre (1) mène, dans une première position, de l'entrée (2) du carter (1) dans l'espace intérieur de l'élément filtrant (4), et de là, à travers la surface-enveloppe (4m), vers l'extérieur, dans un espace extérieur (4c) entourant la surface-enveloppe (4m) à l'intérieur du carter (1), puis de là vers la sortie (3) du carter (1), et mène, dans une deuxième position, de l'entrée (2) du carter (1), à travers l'espace extérieur (4c) entourant la surface-enveloppe (4m) à l'intérieur du carter (1), et de là, à travers la surface-enveloppe (4m), vers l'intérieur, dans l'espace intérieur de l'élément filtrant (4), puis de là, vers la sortie (3).

2. Dispositif de filtre (100) selon la revendication 1, comprenant, par ailleurs, un entraînement (9, 9a) pour faire coulisser l'élément filtrant (4, 5, 6) dans le carter (1).

3. Dispositif de filtre (100) selon la revendication 2, dans lequel l'entraînement (9, 9a) comprend un entraînement mécanique, par exemple un entraînement à main, ou dans lequel l'entraînement comprend un entraînement pneumatique, et/ou dans lequel l'entraînement comprend un moteur, par exemple un moteur électrique.

4. Dispositif de filtre (100) selon l'une au moins des revendications 1 - 3, dans lequel le carter (1) comprend une vanne (13, 13a) pour assurer la vidange du carter (1).

5. Dispositif de filtre (100) selon la revendication 4, dans lequel la vanne (13, 13a) pour la vidange du carter (1), comprend un entraînement (13a) mécanique et/ou pneumatique et/ou par moteur électrique.

6. Dispositif de filtre (100) selon l'une au moins des revendications 1 - 5, dans lequel le carter (1) comprend, en outre, une ouverture qui peut être fermée par un couvercle (10).

7. Dispositif de filtre (100) selon la revendication 6, dans lequel le couvercle (10) peut être fixé au carter (10c) au moyen d'une liaison par pince de serrage (10a) et/ou d'une combinaison vis-écrou (10b) et/ou d'une combinaison d'étrier à pivotement (10c).

8. Système de filtre (200) comprenant un dispositif de filtre (100) selon l'une des revendications 1-7, et comportant une conduite de sortie, qui est reliée à la sortie (3) du dispositif de filtre (100), la conduite de sortie comprenant un élément inverseur (17, 17a, 18, 18a, 16, 16b) avec deux conduites de sortie (3a, 3b), qui est conçu pour diriger le fluide dans une conduite (3b) poursuivant le circuit de traitement ou diriger le fluide dans une conduite d'écoulement d'évacuation (3a).

9. Système de filtre (200) selon la revendication 8, dans lequel l'élément inverseur comprend une vanne 3/2 (3 orifices, 2 voies) (16, 16b), ou dans lequel l'élément inverseur comprend une combinaison de vannes constituée de deux vannes d'arrêt ou d'isolation (17, 17a, 18, 18a), par exemple des vannes à clapet.

10. Système de filtre (200) selon la revendication 8 ou la revendication 9, comprenant, par ailleurs, une conduite d'alimentation, la conduite d'alimentation et la conduite de sortie comprenant chacune au moins un capteur de pression ou manomètre (14, 14', 15, 15'), qui sont conçus pour déterminer une différence de pression entre la conduite d'alimentation et la conduite de sortie, en vue d'indiquer la nécessité d'un rétro-lavage du dispositif de filtre (100).

11. Système de filtre (200) selon la revendication 10, comprenant, par ailleurs, une commande qui est conçue pour effectuer le rétro-lavage de manière périodique et/ou lorsqu'une différence de pression déterminée, prédéfinie, est dépassée.

12. Procédé pour filtrer un fluide à l'aide d'un dispositif de filtre (100) selon la revendication 1, comprenant les étapes suivantes :
(a) coulissement de l'élément filtrant (4) vers la première ou la deuxième position ;
(b) écoulement du fluide à travers l'élément filtrant (4), de l'espace intérieur de l'élément filtrant à travers la surface-enveloppe (4m), vers l'extérieur, ou bien de l'espace extérieur (4c) entourant la surface-enveloppe (4m), à travers la surface-enveloppe (4m), vers l'intérieur, dans l'espace intérieur de l'élément filtrant ;
(c) coulissement de l'élément filtrant (4) de la position sélectionnée dans l'étape (a), vers l'autre des deux positions ; et
(d) écoulement d'un deuxième fluide à travers l'élément filtrant (4), la direction d'écoulement à travers la surface-enveloppe (4m) étant inversée par rapport à la direction d'écoulement dans l'étape (b).

13. Procédé selon la revendication 12, le carter (1) comprenant une vanne (13, 13a) pour assurer la vidange du carter (1) ; le procédé comprenant, par ailleurs, l'étape suivante :
(d) vidange du carter (1) par ouverture de la vanne (13, 13a) destinée à la vidange du carter (1).

14. Procédé selon l'une des revendications 12 ou 13, comprenant, par ailleurs, l'étape suivante :
(c1) détermination d'une différence de pression entre l'entrée (2) et la sortie (3) du dispositif de filtre (100), et indication de la différence de pression entre l'entrée (2) et la sortie (3).

15. Procédé selon la revendication 14, comprenant, par ailleurs, l'étape suivante : (c2) signalement de la nécessité d'un rétro-lavage de l'élément filtrant (4) lorsqu'une valeur de seuil prédéterminée de la différence de pression est dépassée, et (c3) mise en route du rétro-lavage conformément à l'étape (c).
